# EUROPEAN PATENT SPECIFICATION

(11) **EP 3 608 166 B1**
(45) Date of publication and mention of the grant of the patent: **21.10.2020**
(21) Application number: 18202020.6
(22) Date of filing: 23.10.2018
(51) Int. Cl.: B60N 2/58, B60N 2/60

(54) **INJECTION-MOLDED HOOK STRIP TYPE SEAT COVERING FIXING STRUCTURE FOR A SEAT CUSHION OF A CAR**
SPRITZGEGOSSENE SITZABDECKUNGSBEFESTIGUNGSSTRUKTUR VOM HAKENLEISTENTYP FÜR EIN SITZKISSEN EINES AUTOS
STRUCTURE DE FIXATION DE RECOUVREMENT DE SIÈGE DE TYPE BANDE À CROCHETS MOULÉE PAR INJECTION POUR UN COUSSIN DE SIÈGE DE VOITURE

(30) Priority: 10.08.2018 TW 107127906
(43) Date of publication of application: 12.02.2020
(73) Proprietor: Taiwan Paiho Limited, Chang Hwa Hsien (TW)
(72) Inventor: CHENG, Allen, Ho Mei Town, Chang Hwa Hsien (TW)
(74) Representative: Prinz & Partner mbB

(56) References cited:
- CN-U- 205 440 056
- DE-U1-202016 005 135
- US-A- 5 180 618

## Description

### Field of the Invention

The present invention relates generally to a seat covering fixing structure and, more particularly to an injection-molded hook strap type seat covering fixing structure for a seat cushion of a car.

### Background of the Invention

Traditionally, a manufacture of a seat cushion of a car involves injecting a foam material into a pre-designed mold to form a seat cushion with a desired shape. Then, after a seat cushion is formed, a seat covering needs to be fit to the seat cushion to cover it and to give it an aesthetics appearance. One way of fixing a seat covering to a seat cushion of a car is to use a hook-and-loop type fastening device (e.g., Velcro □) as a fastener. Specifically, this type of seat covering fixing structure is formed by attaching hook straps in a seat cushion of a car and fixing the set cover onto the seat cushion by means of the engagement between the hooks of the hook strips in the seat cushion and the loop structures provided on the seat covering.

Normally, in a process of making a seat cushion of a car, the hook straps are disposed at predetermined positions of a specifically designed mold, then a foam material is injected into the mold. The hook straps will then be attached to the seat cushion during this manufacturing process.

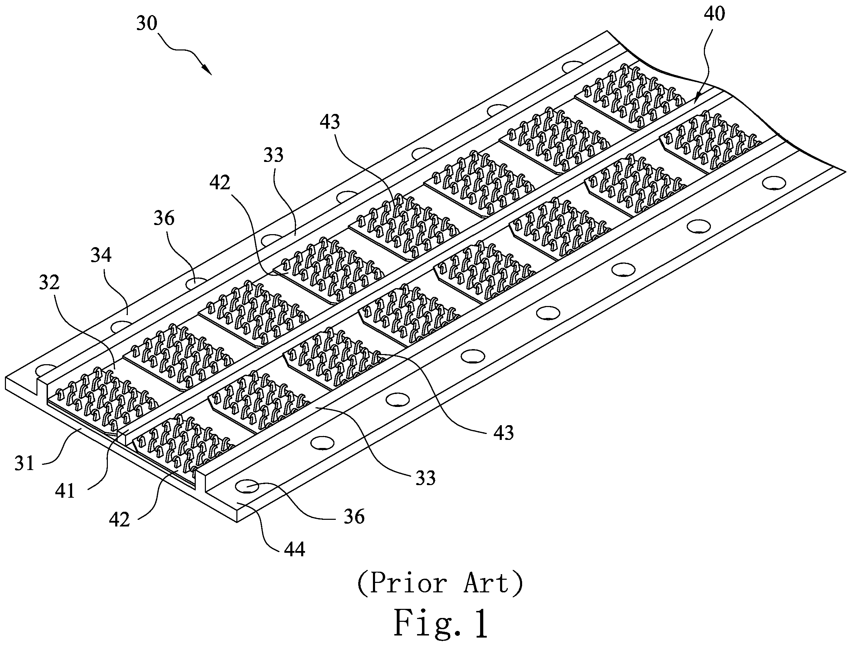

FIG. 1 illustrates one example of this fastening strap 30 used in a seat cushion of a car disclosed in US 8,322,022 which is owned by the inventor of the present application. As shown in FIG. 1, the fastening strap 30 includes a substrate 31 made of a material that allows foam material to penetrate into the voids of the material, such as non-woven fabric or fibrous fabric. This hook strap 30 further includes a magnetic material layer 32 coated on the substrate 31 and an engaging member 40 bonded to the magnetic material layer 32. The engaging member 40 has a plurality of hooks 43 formed thereon to form an engaging face. Additionally, the substrate 31 has two longitudinal sidewalls 33 each formed along the sides of the engaging member 40 and having a height greater than a height of the hooks 43, so as to prevent the foam material from entering the spaces between the hooks 43 during a foam material filling process of a seat cushion manufacturing.

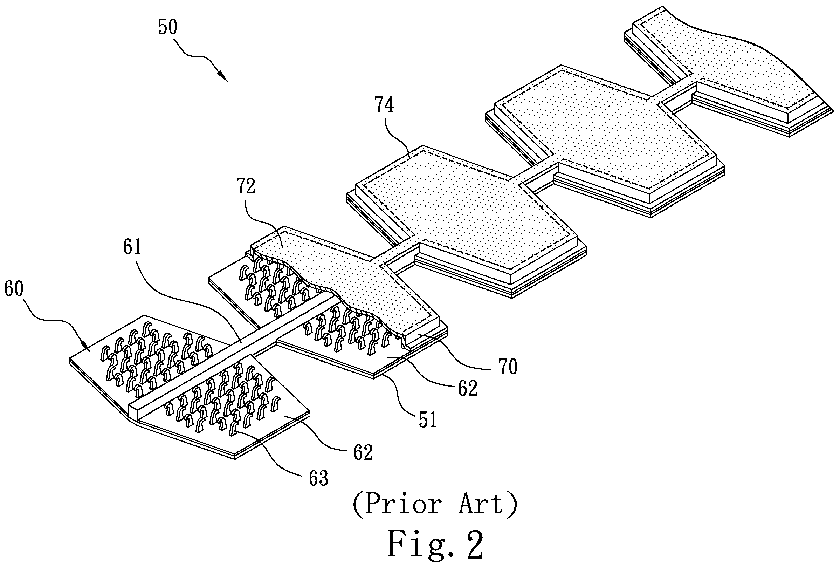

Another example of this fastening strap used in a seat cushion of a car is shown in FIG. 2. As illustrated in FIG. 2, the fastening strap 50 includes a substrate 51 and a fastening member 60 having hooks 63 formed thereon. Instead of having two protective sidewalls, this fastening strap 50 includes a protective layer 70 that is directly and detachably attached to the fastening member 60 and cover the hooks 63 so as to provide a protective function to prevent the foam material from entering the spaces between the hooks 63 during a foam material filling process of a seat cushion manufacturing. US 5180618 discloses a hook strap type seat covering fixing structure for a seat cushion of a car.

Although the above-mentioned hook straps used in a seat cushion of a car may provide a function of fixing the seat coverings onto a seat cushion, they however have drawbacks and application limitations.

For instance, in an operation of placing the hook straps on plateaus (especially, straight plateaus) at predetermined locations of the foaming mold, the stiffness of traditional hook straps is insufficient due to its material and/or its structure such that two hands are required to place the soft hook straps onto the plateaus of the mold and thus slow down the operation of placing the hook straps at predetermined locations of the mold and adversely affect the production speed of the seat cushion manufacturing.

Therefore, there exists a need in seat cushion of a car for a hook strap that is able to provide a stiff and strong hook strap that can be placed onto the straight plateaus of the foaming mold with one hand in a seat cushion manufacturing procedure.

### Summary of the Invention

In view of the above-mentioned disadvantages/problems associated with the existing hook straps used in a seat cushion of a car, one object of the present invention is to provide a stiff and strong hook strap type seat covering fixing structure that can be placed onto the straight plateaus of the foaming mold with one hand so as to simply and expedite the seat cushion manufacturing process and in turn increase the yield rate and lower the manufacturing cost.

According to a first embodiment of the present invention, an injection-molded hook strap type seat covering fixing structure for a seat cushion of a car is provided, the hook strap type seat covering fixing structure includes an elongated hook strap which has a plurality of hooks formed on a first surface thereof, a peripheral wall formed on the first surface and surrounding the plurality hooks, and reinforcing configurations formed along lateral longitudinal sides of the hook strap outside the peripheral wall; two barrier sponges each attached on top of the reinforcing configurations; a backing layer affixed to a second surface, opposing the first surface, of the hook strap; and a magnetic material layer disposed between the second surface of the hook strap and the backing layer.

According to a second embodiment of the present invention, an injection-molded hook strap type seat covering fixing structure for a seat cushion of a car is provided, the hook strap type seat covering fixing structure includes an elongated hook strap which has a plurality of hooks formed on a first surface thereof, a peripheral wall formed on the first surface and surrounding the plurality hooks, and at least two reinforcing ribs formed among the plurality hooks in parallel with each other in a longitudinal direction of the hook strap; two barrier sponges each attached to a lateral longitudinal side of the hook strap outside of the peripheral wall; a backing layer affixed to a second surface, opposing the first surface, of the hook strap; and a magnetic material layer disposed between the second surface of the hook strap and the backing layer.

According to a third embodiment of the present invention, an injection-molded hook strap type seat covering fixing structure for a seat cushion of a car is provided, the hook strap type seat covering fixing structure includes an elongated hook strap which has a plurality of hooks formed on a first surface thereof, a peripheral wall formed on the first surface and surrounding the plurality hooks, reinforcing configurations formed along lateral longitudinal sides of the hook strap at positions outside the peripheral wall, and at least two reinforcing ribs formed among the plurality hooks in parallel with each other in a longitudinal direction of the hook strap; two barrier sponges each attached on top of the reinforcing configurations; a backing layer affixed to a second surface, opposing the first surface, of the hook strap; and a magnetic material layer disposed between the second surface of the hook strap and the backing layer.

Other features and advantages of the present invention will become clear from reading the description of the present specification with reference to the accompanying drawings.

### Brief Description of the Drawings

For a more complete understanding of the present invention and the advantages thereof, reference is now made to the following description taken in conjunction with the accompanying drawings, wherein:
Fig. 1 is a schematic perspective view illustrating a prior art fastening strap structure used in a seat cushion of a car;
Fig. 2 is a schematic perspective view illustrating another prior art fastening strap structure used in a seat cushion of a car with a part of cover layer being removed;
Fig. 3 is a schematic exploded perspective view showing an injection-molded hook strap type seat covering fixing structure for a seat cushion of a car according to a first embodiment of the present invention;
Fig. 4 is a schematic assembled perspective view of the seat covering fixing structure shown in Fig. 3;
Fig. 5 is a schematic exploded perspective view showing an injection-molded hook strap type seat covering fixing structure for a seat cushion of a car according to a second embodiment of the present invention;
Fig. 6 is a schematic assembled perspective view of the seat covering fixing structure shown in Fig. 5;
Fig. 7 is a schematic exploded perspective view showing an injection-molded hook strap type seat covering fixing structure for a seat cushion of a car according to a third embodiment of the present invention; and
Fig. 8 is a schematic assembled perspective view of the seat covering fixing structure shown in Fig. 7.

### Detailed Description of the Invention

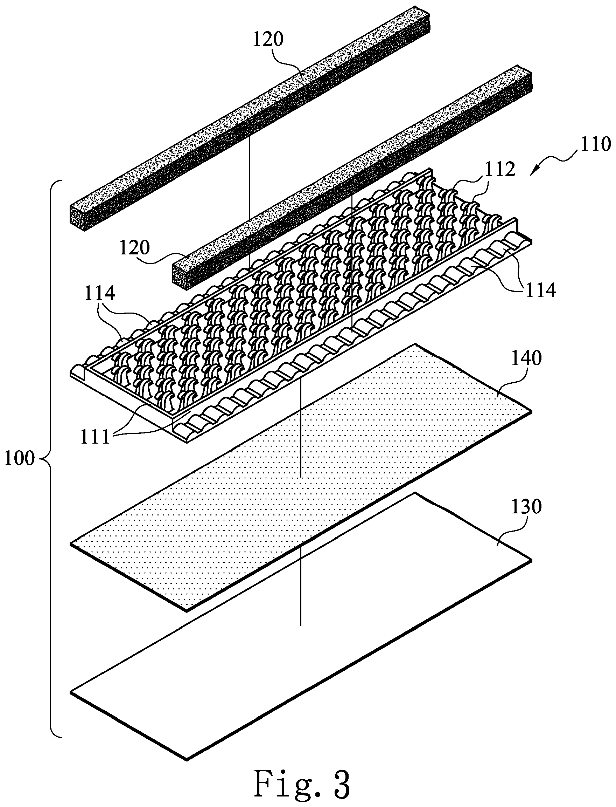

Referring now to Figs. 3-8 in which preferred embodiments of the injection-molded hook strap type seat covering fixing structure for a seat cushion of a car of the present invention are illustrated to describe the present invention.

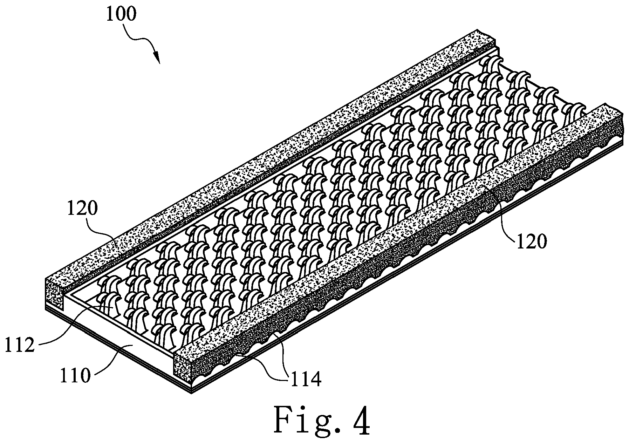

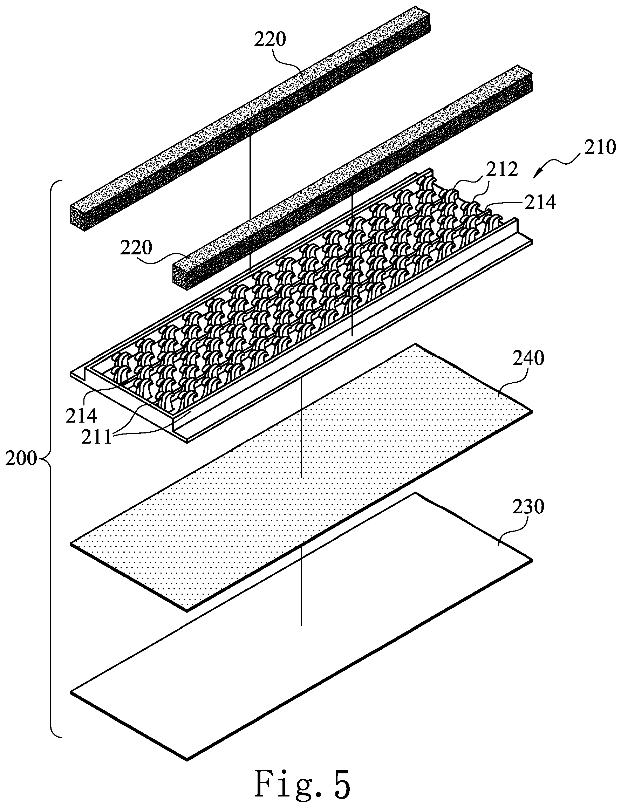

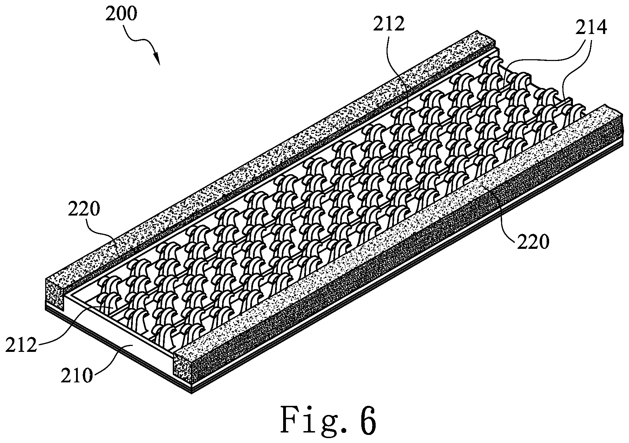

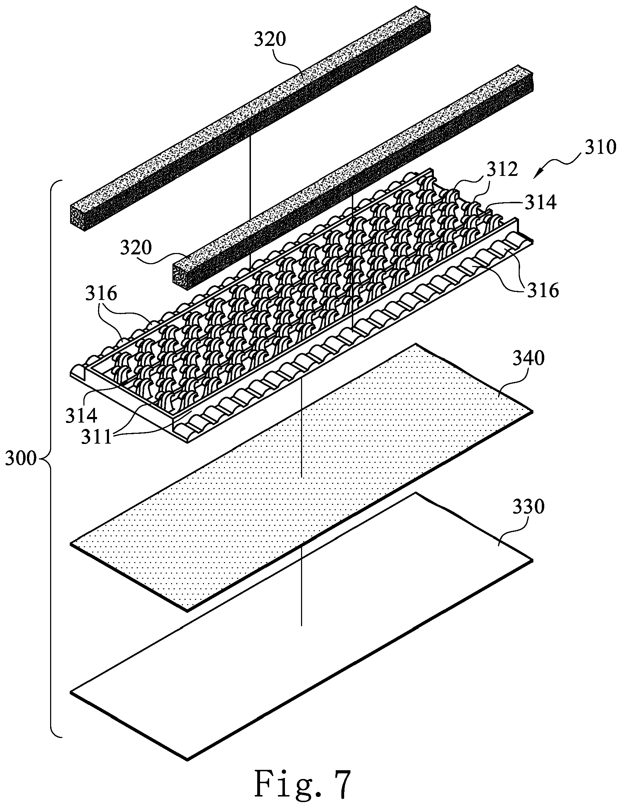

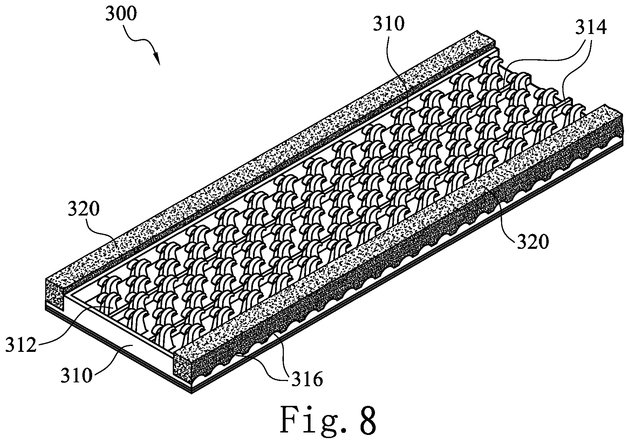

Fig. 3 is a schematic exploded perspective view showing a hook strap type seat covering fixing structure 100 according to a first embodiment of the present invention. Fig. 4 is a schematic assembled perspective view of the hook strap type seat covering fixing structure 200 shown in Fig. 3. Fig. 5 is a schematic exploded perspective view showing a hook strap type seat covering fixing structure 200 according to a second embodiment of the present invention. Fig. 6 is a schematic assembled perspective view of the hook strap type seat covering fixing structure 200 shown in Fig. 5. Fig. 7 is a schematic exploded perspective view showing a hook strap type seat covering fixing structure 300 according to a third embodiment of the present invention. Fig. 8 is a schematic assembled perspective view of the hook strap type seat covering fixing structure 300 shown in Fig. 7.

As shown in Figs. 3 and 4, the hook strap type seat covering fixing structure 100 includes an elongated hook strap 110 which has a plurality of hooks 112 formed on a first surface thereof, a peripheral wall 111 formed on the first surface and surrounding the plurality hooks 112, and reinforcing configurations, such as wave shape reinforcing configurations 114, formed along lateral longitudinal sides of the hook strap 110 outside the peripheral wall 111 so as to increase the rigidity of the hook strap 110. In this embodiment, the seat covering fixing structure 100 further includes two barrier sponges 120. Each of the barrier sponges 120 is attached on top of the reinforcing configurations 114 formed at one lateral side of the hook strap 110 by means of, for example, an adhesive so as to prevent the foam material from entering spaces among the plurality of hooks 112 during a foam material filling process of a seat cushion manufacturing. Additionally, the seat covering fixing structure 100 of the present embodiment further includes a backing layer 130 which is affixed to a second surface that is opposing the first surface of the hook strap 110, for example, by means of supersonic wave welding or thermal welding and a magnetic material layer 140 disposed between the second surface of the hook strap 110 and the backing layer 130, wherein the backing layer 130 may be formed of a polyester fabrics layer or a non-woven fabrics layer.

Next, a hook strap type seat covering fixing structure 200 according to a second embodiment of the present invention will be described with reference to Figs. 5 and 6. In the second embodiment illustrated in Figs. 5 and 6, the hook strap type seat covering fixing structure 200 includes an elongated hook strap 210 which has a plurality of hooks 212 formed on a first surface thereof, a peripheral wall 211 formed on the first surface and surrounding the plurality hooks 212, and at least two reinforcing ribs 214 formed among the plurality hooks 212 in parallel with each other in a longitudinal direction of the hook strap 210 so as to increase the rigidity of the hook strap 210. In this embodiment, the seat covering fixing structure 200 further includes two barrier sponges 220. Each of the barrier sponges 220 is attached to a lateral longitudinal side of the hook strap 210 outside of the peripheral wall 211 by means of, for example, an adhesive so as to prevent the foam material from entering spaces among the plurality of hooks 212 during a foam material filling process of a seat cushion manufacturing. Additionally, the seat covering fixing structure 200 of the present embodiment further includes a backing layer 230 which is affixed to a second surface that is opposing the first surface of the hook strap 210, for example, by means of supersonic wave welding or thermal welding and a magnetic material layer 240 disposed between the second surface of the hook strap 210 and the backing layer 230, wherein the backing layer 230 may be formed of a polyester fabrics layer or a non-woven fabrics layer.

Next, reference is made to Figs. 7 and 8, in which a hook strap type seat covering fixing structure 300 according to a third embodiment of the present invention is illustrated. In the third embodiment, the hook strap type seat covering fixing structure 300 includes an elongated hook strap 310 which has a plurality of hooks 312 formed on a first surface thereof, a peripheral wall 311 formed on the first surface and surrounding the plurality hooks 312, reinforcing configurations, such as wave shape reinforcing configurations 316, formed along lateral longitudinal sides of the hook strap 310 outside the peripheral wall 311, and at least two reinforcing ribs 314 formed among the plurality hooks 312 in parallel with each other in a longitudinal direction of the hook strap 310. The reinforcing configurations 316 and the at least two reinforcing ribs 314 are provided to increase the rigidity of the hook strap 310. In this embodiment, the seat covering fixing structure 300 further includes two barrier sponges 320. Each of the barrier sponges 320 is attached on top of the reinforcing configurations 314 formed at one lateral side of the hook strap 310, for example, by means of an adhesive so as to prevent the foam material from entering spaces among the plurality of hooks 312 during a foam material filling process of a seat cushion manufacturing. Additionally, the seat covering fixing structure 300 of the present embodiment further includes a backing layer 330 which is affixed to a second surface that is opposing the first surface of the hook strap 310, for example, by means of supersonic wave welding or thermal welding and a magnetic material layer 340 disposed between the second surface of the hook strap 310 and the backing layer 330, wherein the backing layer 330 may be formed of a polyester fabrics layer or a non-woven fabrics layer.

Because the seat covering fixing structure of the present invention comprises the unique structural features described above, the seat covering fixing structure of the present invention possesses a function/advantage that existing prior art fastening straps do not have (that is, the present invention can provide a stiff and strong hook strap type seat covering fixing structure that can be placed onto the straight plateaus of the foaming mold with one hand so as to simply and expedite the seat cushion manufacturing process and in turn increase the yield rate and lower the manufacturing cost). Therefore, the seat covering fixing structure of the present invention is a creation that has a great industrial applicability.

Although the present invention has been described above according to the preferred embodiments thereof, it is not intend to limit the scope of the present invention to specific structural features described above. In fact, there exist various modifications and variations as long as they fall within the scope of the claims.

It will be apparent to people skilled in this art that many modifications can be made to the disclosed structures without departing from the scope of the invention. Therefore, it is the intent of the appended claims to cover all such variations and modifications as come within the scope of this invention.

It is to be emphasized that the features shown in the drawings are not limited to the combination of all other features in the corresponding drawing. Rather, features of the different drawings can be combined in a different manner. For example, the reinforcing ribs and reinforcing configurations can be combined in embodiments not shown in the drawings.

## Claims

1. A hook strap type seat covering fixing structure (100) for a seat cushion of a car, comprising:
an elongated hook strap (110) which has a plurality of hooks (112) formed on a first surface thereof, a peripheral wall (111) formed on the first surface and surrounding the plurality hooks, and reinforcing configurations (114) formed along lateral longitudinal sides of the hook strap outside the peripheral wall;
two barrier sponges (120) each attached on top of the reinforcing configurations (114) formed along lateral longitudinal sides of the hook strap (110);
a backing layer (130) affixed to a second surface, opposing the first surface, of the hook strap (110); and
a magnetic material layer (140) disposed between the second surface of the hook strap (110) and the backing layer (130).

2. A hook strap type seat covering fixing structure (200) for a seat cushion of a car, comprising:
an elongated hook strap (210) which has a plurality of hooks (212) formed on a first surface thereof, a peripheral wall (211) formed on the first surface and surrounding the plurality hooks, and at least two reinforcing ribs (214) formed among the plurality hooks in parallel with each other in a longitudinal direction of the hook strap (210);
two barrier sponges (220) each attached to a lateral longitudinal side of the hook strap (210) outside of the peripheral wall (211);
a backing layer (230) affixed to a second surface, opposing the first surface, of the hook strap (210); and
a magnetic material layer (240) disposed between the second surface of the hook strap (210) and the backing layer (230).

3. A hook strap type seat covering fixing structure (300) for a seat cushion of a car, comprising:
an elongated hook strap (310) which has a plurality of hooks (312) formed on a first surface thereof, a peripheral wall (311) formed on the first surface and surrounding the plurality hooks, at least two reinforcing ribs (314) formed among the plurality hooks (312) in parallel with each other in a longitudinal direction of the hook strap (310), and reinforcing configurations (316) formed along lateral longitudinal sides of the hook strap (310) outside the peripheral wall (311);
two barrier sponges (320) each attached on top of the reinforcing configurations (316) formed along lateral longitudinal sides of the hook strap (310);
a backing layer (330) affixed to a second surface, opposing the first surface, of the hook strap (310); and
a magnetic material layer (340) disposed between the second surface of the hook strap (310) and the backing layer (330).

4. A hook strap type seat covering fixing structure according to claim 1, 2 or 3, wherein the backing layer (130, 230, 330) is formed of a polyester fabrics layer or a non-woven fabrics layer.

## Patentansprüche

1. Sitzbezugfixierstruktur (100) vom Hakenbandtyp für ein Sitzpolster eines Autos, mit:
einem langgestreckten Hakenband (110), das mehrere Haken (112), die auf einer ersten Oberfläche davon ausgebildet sind, eine Umfangswand (111), die auf der ersten Oberfläche ausgebildet ist und die mehreren Haken umgibt, und Verstärkungsgestaltungen (114) aufweist, die entlang seitlicher Längsseiten des Hakenbandes außerhalb der Umfangswand ausgebildet sind,
zwei Sperrschwämmen (120), die jeweils oben auf den Verstärkungsgestaltungen (114) befestigt sind, die entlang seitlicher Längsseiten des Hakenbandes (110) ausgebildet sind,
einer Trägerschicht (130), die an einer zur ersten Oberfläche entgegengesetzten zweiten Oberfläche des Hakenbandes (110) angebracht ist, und
einer Magnetmaterialschicht (140), die zwischen der zweiten Oberfläche des Hakenbandes (110) und der Trägerschicht (130) angeordnet ist.

2. Sitzbezugfixierstruktur (200) vom Hakenbandtyp für ein Sitzpolster eines Autos, mit:
einem langgestreckten Hakenband (210), das mehrere Haken (212), die auf einer ersten Oberfläche davon ausgebildet sind, eine Umfangswand (211), die auf der ersten Oberfläche ausgebildet ist und die mehreren Haken umgibt, und wenigstens zwei Verstärkungsrippen (214) aufweist, die zwischen den mehreren Haken parallel zueinander in einer Längsrichtung des Hakenbandes (210) ausgebildet sind,
zwei Sperrschwämmen (220), die jeweils an einer seitlichen Längsseite des Hakenbandes (210) außerhalb der Umfangswand (211) befestigt sind,
einer Trägerschicht (230), die an einer zur ersten Oberfläche entgegengesetzten zweiten Oberfläche des Hakenbandes (210) angebracht ist, und
einer Magnetmaterialschicht (240), die zwischen der zweiten Oberfläche des Hakenbandes (210) und der Trägerschicht (230) angeordnet ist.

3. Sitzbezugfixierstruktur (300) vom Hakenbandtyp für ein Sitzpolster eines Autos, mit:
einem langgestreckten Hakenband (310), das mehrere Haken (312), die auf einer ersten Oberfläche davon ausgebildet sind, eine Umfangswand (311), die auf der ersten Oberfläche ausgebildet ist und die mehreren Haken umgibt, wenigstens zwei Verstärkungsrippen (314), die zwischen den mehreren Haken (312) parallel zueinander in einer Längsrichtung des Hakenbandes (310) ausgebildet sind, und Verstärkungsgestaltungen (316) aufweist, die entlang seitlicher Längsseiten des Hakenbandes (310) außerhalb der Umfangswand (311) ausgebildet sind,
zwei Sperrschwämmen (320), die jeweils oben auf den Verstärkungsgestaltungen (316) befestigt sind, die entlang seitlicher Längsseiten des Hakenbandes (310) ausgebildet sind,
einer Trägerschicht (330), die an einer zur ersten Oberfläche entgegengesetzten zweiten Oberfläche des Hakenbandes (310) angebracht ist, und
einer Magnetmaterialschicht (340), die zwischen der zweiten Oberfläche des Hakenbandes (310) und der Trägerschicht (330) angeordnet ist.

4. Sitzbezugfixierstruktur vom Hakenbandtyp nach Anspruch 1, 2 oder 3, bei der die Trägerschicht (130, 230,330) aus einer Polyestergewebeschicht oder einer Vliesstoffschicht gebildet ist.

## Revendications

1. Structure (100) de fixation de housse de siège du type bande à crochets pour un coussin de siège d'un véhicule, comprenant :
une bande à crochets allongée (110) qui présente une pluralité de crochets (112) réalisés sur une première surface de celle-ci, une paroi périphérique (111) réalisée sur la première surface et entourant la pluralité de crochets, et des formes de renforcement (114) réalisées le long de côtés longitudinaux latéraux de la bande à crochets à l'extérieur de la paroi périphérique ;
deux éponges barrière (120) chacune attachées sur les formes de renforcement (114) réalisées le long de côtés longitudinaux latéraux de la bande à crochets (110) ;
une couche de support (130) fixée sur une deuxième surface opposée à la première surface de la bande à crochets (110) ; et
une couche de matériau magnétique (140) agencée entre la deuxième surface de la bande à crochets (110) et la couche de support (130).

2. Structure (200) de fixation de housse de siège du type bande à crochets pour un coussin de siège d'un véhicule, comprenant :
une bande à crochets allongée (210) qui présente une pluralité de crochets (212) réalisés sur une première surface de celle-ci, une paroi périphérique (211) réalisée sur la première surface et entourant la pluralité de crochets, et au moins deux nervures de renforcement (214) réalisées parmi la pluralité de crochets de manière parallèle les unes aux autres dans un sens longitudinal de la bande à crochets (210) ;
deux éponges barrière (220) chacune attachées sur un côté longitudinal latéral de la bande à crochets (210) à l'extérieur de la paroi périphérique (211) ;
une couche de support (230) fixée sur une deuxième surface opposée à la première surface de la bande à crochets (210) ; et
une couche de matériau magnétique (240) agencée entre la deuxième surface de la bande à crochets (210) et la couche de support (230).

3. Structure (300) de fixation de housse de siège du type bande à crochets pour un coussin de siège d'un véhicule, comprenant :
une bande à crochets allongée (310) qui présente une pluralité de crochets (312) réalisés sur une première surface de celle-ci, une paroi périphérique (311) réalisée sur la première surface et entourant la pluralité de crochets, au moins deux nervures de renforcement (314) réalisées parmi la pluralité de crochets (312) de manière parallèle les unes aux autres dans un sens longitudinal de la bande à crochets (310), et des formes de renforcement (316) réalisées le long de côtés longitudinaux latéraux de la bande à crochets (310) à l'extérieur de la paroi périphérique (311) ;
deux éponges barrière (320) chacune attachées sur les formes de renforcement (316) réalisées le long de côtés longitudinaux latéraux de la bande à crochets (310) ;
une couche de support (330) fixée sur une deuxième surface opposée à la première surface de la bande à crochets (310) ; et
une couche de matériau magnétique (340) agencée entre la deuxième surface de la bande à crochets (310) et la couche de support (330).

4. Structure de fixation de housse de siège du type bande à crochets selon la revendication 1, 2 ou 3, dans laquelle la couche de support (120, 230, 330) est réalisée à partir d'une couche de tissus polyester ou d'une couche de textiles non-tissés.
